# FASCICULE DE BREVET EUROPEEN

(11) **EP 2 920 655 B1**
(45) Date de publication et mention de la délivrance du brevet: **05.05.2021**
(21) Numéro de dépôt: 13788772.5
(22) Date de dépôt: 08.11.2013
(51) Int. Cl.: G04G 21/08

(54) **MODE D'ACTIVATION D'UNE MONTRE ELECTRONIQUE**
MODUS ZUR AKTIVIERUNG EINER ELEKTRONISCHEN UHR
MODE OF ACTIVATION OF AN ELECTRONIC WATCH

(30) Priorité: 13.11.2012 EP 12192313
(43) Date de publication de la demande: 23.09.2015
(73) Titulaire: ETA SA Manufacture Horlogère Suisse, 2540 Grenchen (CH)
(72) Inventeur: PETERS, Jean-Bernard, CH-2542 Pieterlen (CH)
(74) Mandataire: Collé, Emmanuel
(86) Numéro de dépôt international: PCT/EP2013/073385
(87) Numéro de publication internationale: WO 2014/076008

(56) Documents cités:
- GB-A- 1 482 176
- US-A- 4 120 148
- US-A- 4 205 519
- US-A1- 2002 064 099
- US-A1- 2006 092 177
- US-A1- 2008 253 234
- US-A1- 2011 115 784
- US-A1- 2011 187 660

## Description

L'invention concerne un objet portable comprenant un boîtier fermé par un fond et par des moyens d'affichage, un module électronique agencé dans ledit boîtier fournissant au moins une première information et une seconde information, et des moyens de commande pour agir sur ledit module électronique, ledit objet portable étant configuré pour fonctionner selon un premier mode de fonctionnement dans lequel ladite première information est affichée ou selon un seconde mode de fonctionnement dans lequel ladite seconde information est affichée

### ARRIERE PLAN TECHNOLOGIQUE

Il est connu des pièces d'horlogerie 1 comprenant un boîtier 2 constitué d'une carrure fermée par un fond et par des moyens d'affichage 3. Ledit boîtier est agencé pour qu'un module électronique soit placé à l'intérieur. Ce module électronique est configuré pour fournir un certain nombre d'informations envoyées vers les moyens d'affichage. Les informations fournies par le module électronique peuvent être par exemple, l'heure, la date, une fonction chronographe ou autres. Ces informations peuvent provenir de capteurs communiquant avec ledit module électronique. Dans ce cas, il est nécessaire de pouvoir sélectionner la fonction désirée.

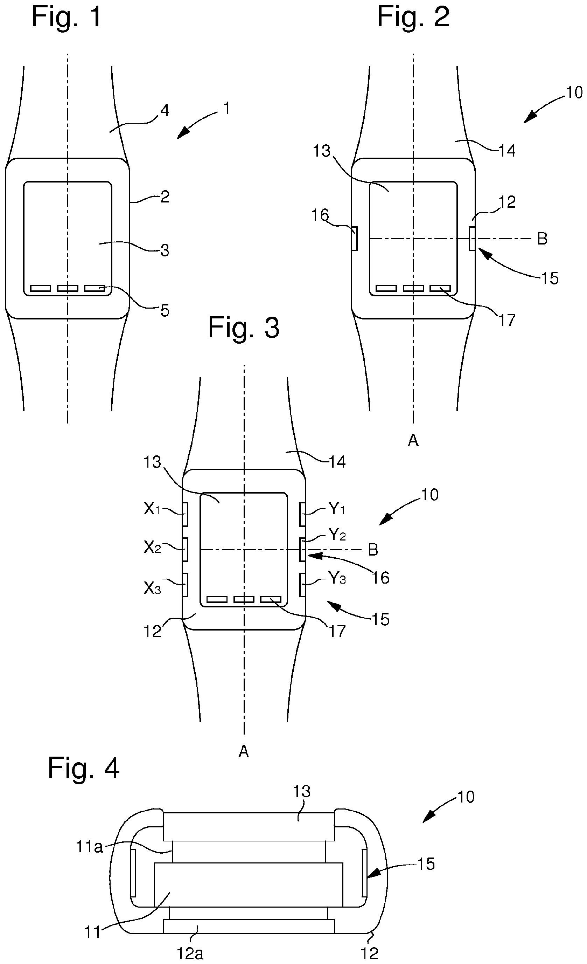

La pièce d'horlogerie comprend en outre des moyens de commande permettant de la contrôler. Ces moyens de commande peuvent par exemple comprendre des touches tactiles 5 de type capacitif. Ces touches tactiles sont agencées au niveau des moyens d'affichage comme visible sur la figure 1. Ainsi, par appui sur ces touches tactiles, l'utilisateur est susceptible de commander la pièce d'horlogerie.

La pièce d'horlogerie est agencée pour fonctionner selon deux modes de fonctionnement : un mode dit normal dans lequel une information de temps est affichée et un mode de fonctionnement dit spécial dans lequel l'utilisateur peut choisir d'autres fonctions.

Pour activer le mode de fonctionnement dit spécial, il est actuellement prévu que l'utilisateur exerce une pression sur deux touches tactiles en même temps.

Cette manipulation est détectée par le module électronique qui va alors engager le mode de fonctionnement spécial et permettre à l'utilisateur de choisir une fonction.

Un inconvénient de cette méthode est que l'utilisateur ne lit pas forcement la notice et, instinctivement, il ne sait pas comment activer le passage entre les différents modes de fonctionnement. De même, cette manipulation est possible si les touches sont suffisamment grandes et espacées mais si les touches tactiles sont petites et proches, la manipulation n'est pas aisée. En effet, l'utilisateur risque d'exercer une pression sur des touches qui ne sont pas celles permettant d'activer le passage d'un mode de fonctionnement à un autre.

On connaît aussi le document US2008/253234 qui décrit une montre bracelet ayant quatre boutons poussoirs sur des côtés opposés du boîtier. Ces poussoirs définissent deux paires. La montre est capable de passer d'un mode de fonctionnement à un autre en appuyant sur la paire définie par les boutons S3 et S4.

### RESUME DE L'INVENTION

L'invention a pour but de pallier les inconvénients de l'art antérieur en proposant de fournir une pièce d'horlogerie dont l'activation des différents modes de fonctionnement est intuitive et fiable.

A cet effet, la présente invention concerne un objet portable tel que défini dans la revendication indépendante 1. Des formes de réalisation préférées sont définies dans les revendications dépendantes 2 à 4.

L'invention concerne également un procédé tel que défini dans la revendication indépendante 5. Des formes de réalisation préférées sont définies dans les revendications dépendantes 6 à 11.

### BREVE DESCRIPTION DES FIGURES

Les buts, avantages et caractéristiques de l'objet portable et du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement une pièce d'horlogerie connue de l'art antérieur;
- La figure 2 représente schématiquement une vue de dessus d'une pièce d'horlogerie ne faisant pas partie de l'invention revendiquée, mais étant utile pour mieux comprendre l'invention.
- La figure 3 représente schématiquement une vue de dessus de la glace de la pièce d'horlogerie selon l'invention ;
- La figure 4 schématiquement une vue de côté de la pièce d'horlogerie selon l'invention.

### DESCRIPTION DETAILLEE

Sur la figure 2, on peut voir représenté un objet portable 10 selon une réalisation utile pour mieux comprendre l'invention. Cet objet portable 10 est, par exemple, une pièce d'horlogerie. Cette pièce d'horlogerie comprend un boitier 12 fermé par un fond 12a et par des moyens d'affichage 13. Le boîtier 12 pourra être réalisé en plastique par exemple. L'objet portable comprend en outre un bracelet 14 fixé sur deux flancs opposés du boîtier 12. De préférence, le bracelet 14 est fixé de sorte à se trouver dans le prolongement de l'axe 12h - 6h. Les moyens d'affichage 13 sont par exemple un module LCD comprenant un dispositif écran LCD disposé sur une glace, le tout étant fixé sur la carrure de la pièce d'horlogerie.

Dans le boîtier de la pièce d'horlogerie visible à la figure 4, un module électronique 11 est agencé. Ce module électronique 11 est connecté électroniquement aux moyens d'affichage 13 par des moyens de connexion 11a. Ce module électronique 11 est commandé par des moyens de commande 15. Ces moyens de commande 15 peuvent comprendre une pluralité d'éléments tactiles 17 situés au niveau du module LCD 13 de sorte que l'utilisateur puisse commander l'objet portable par le touché. Ce module électronique 11 est configuré pour fournir plusieurs informations qui seront affichées sur le module d'affichage 13. Par exemple, le module électronique 11 est configuré pour fournir une multitude d'informations liée aux temps. On comprend alors que le module électronique 11 est susceptible de fournir une première information de temps comme l'heure, une seconde information de temps comme la date, une troisième information de temps comme une alarme ou une quatrième information comme une fonction chronographe.

De ce fait le module électronique 11 est configuré pour faire fonctionner la pièce d'horlogerie 10 selon deux modes de fonctionnement.

Dans un premier mode de fonctionnement, le module électronique 11 est utilisé afin de fournir et d'afficher la première information qui est l'heure.

Dans un second mode de fonctionnement, le module électronique 11 donne à l'utilisateur un accès aux autres informations qu'il peut fournir comme la seconde information liée à la date, la troisième information de temps liée à une alarme ou la quatrième information liée à une fonction chronographe. Le module électronique 11 peut être agencé pour que les autres informations puissent être affichées conjointement à la première information ou à la place de la première information. On comprendra que le deuxième mode de fonctionnement peut également être un mode de réglage ou un mode de programmation. De même, il est envisageable que le premier mode de fonctionnement soit un mode de veille et le second mode de fonctionnement soit un mode actif.

Pour passer du premier mode de fonctionnement au second mode de fonctionnement, un facteur déclencheur doit être activé.

Dans la réalisation de la figure 2, qui ne fait pas partie de l'invention revendiquée, les moyens de commande 15 de l'objet portable 10 comprennent en outre deux éléments de commutation 16 situés au niveau du boîtier 12 de l'objet portable 10. Plus particulièrement, ces deux éléments de commutation 16 sont situés de part et d'autre du boîtier 12. Ces deux éléments de commutation 16 sont préférentiellement placés en regard l'un de l'autre le long d'un axe parallèle à l'axe 3h-9h. Ces éléments de commutation 16 sont utilisés pour fournir le facteur déclencheur qui va permettre le passage du premier mode de fonctionnement au second mode de fonctionnement. Préférentiellement, ces éléments de commutation 16 sont tactiles. Dans ce cas-là, le boîtier 12 est agencé en conséquence, il sera réalisé dans un matériau permettant la présence de ces éléments de commutation 16 tactiles.

Selon la réalisation selon la figure 2, le facteur déclencheur permettant un passage du premier mode de fonctionnement au second mode de fonctionnement est une action simultanée sur les deux éléments de commutation 16. L'utilisateur place son pouce et son index de part et d'autre du boîtier 12 de l'objet portable 10 et entre en contact avec les deux côtés du boîtier 12. Cette action simultanée est détectée par le module électronique 11 qui va alors passer du premier mode de fonctionnement au second mode de fonctionnement.

Un avantage de cette manipulation est qu'elle est à la fois intuitive et fiable. Cette manipulation est intuitive car elle utilise le geste de pincer le boîtier 12 d'un objet portable 10 comme une pièce d'horlogerie 10. Or ce geste est naturel. Effectivement, l'utilisation de la fonction chronographe d'une montre bracelet 14 utilise une gestuelle similaire car l'utilisateur place son pouce et son index de part et d'autre du boîtier 12 de l'objet portable 10 et presse avec l'index sur l'organe de commande 17 déclenchant le démarrage ou l'arrêt de la fonction chronographe.

Cette manipulation est considérée comme fiable c'est-à-dire qu'un passage intempestif du premier mode de fonctionnement au second mode de fonctionnement est difficile. En effet, si un appui par inadvertance sur une touche est possible, l'appui simultané sur deux touches opposées est quant à lui nettement plus difficile.

Dans un mode de réalisation de l'invention revendiquée, visible à la figure 3, les moyens de commande 15 de l'objet portable 10 comprennent deux séries d'éléments de commutation 16 situés sur le boîtier 12. Plus particulièrement, l'objet portable 10 comprend deux séries d'éléments de commutation 16 situés sur des flancs opposés, les flancs du boîtier 12 parallèles à l'axe 12h - 6h. Les éléments de commutation 16 étant disposés de sorte à être symétrique par rapport à l'axe 12h- 6h. Cette configuration permet alors de multiplier le nombre de combinaisons possibles. Effectivement, cette configuration permet d'envisager que chaque paire d'éléments de commutation 16 en regard l'un de l'autre puisse activer le passage du premier mode de fonctionnement au second mode de fonctionnement. Il devient même envisageable que toutes les paires puissent permettre une telle activation.

Dans un exemple représenté à la figure 3, chacune des deux séries d'éléments de commutation 16 comprend 3 éléments de commutation 16 appelés respectivement X1, X2, X3 et Y1, Y2, Y3, ces éléments de commutation 16 formant des paires.

Selon l'invention, on envisage que les paires X1, Y1 et X2, Y2 et X3, Y3 puissent activer le passage du premier mode de fonctionnement au second mode de fonctionnement. Cette manipulation a pour avantage de permettre à l'utilisateur d'activer le passage du premier mode de fonctionnement au second mode de fonctionnement simplement s'il se souvient de l'action de pincer deux éléments de commutation 16 en regard l'un de l'autre. De ce fait, il n'a pas besoin de retenir une combinaison exacte puisque toutes les combinaisons fonctionnent.

Dans un second mode de réalisation de l'invention, les moyens de commande 15 de l'objet portable comprennent deux séries d'éléments de commutation 16, ces séries étant disposées sur des flancs opposés du boîtier 12, chaque série comprenant au moins deux éléments de commutation 16. Les éléments de commutation 16 sont disposés de sorte à être symétrique par rapport à l'axe 12h- 6h formant ainsi des paires constituées d'éléments de commutation 16 opposés deux à deux. Ce second mode de réalisation se caractérise en ce que le passage du premier mode de fonctionnement au second mode de fonctionnement est activé lors d'une manipulation de glissement. Cette manipulation de glissement consiste à l'activation successive des paires d'éléments de commutation 16. Pour expliquer cette manipulation, il sera considéré, comme visible à la figure 3, que chacune des deux séries d'éléments de commutation 16 comprend 3 éléments de commutation 16 appelés respectivement X1, X2, X3 et Y1, Y2, Y3 formant les paires X1-Y1, X2-Y2 et X3-Y3.

Cette manipulation de glissement consiste alors à activer la paire d'éléments de commutation X1-Y1 par pression des doigts de l'utilisateur et à les faire glisser pour activer successivement la paire d'éléments de commutation X2-Y2 puis la paire d'éléments de commutation X3-Y3. Le module électronique 11 détecte ainsi l'activation des paires d'éléments de commutation 16. Le module électronique 11 est également programmé pour que le passage du premier mode de fonctionnement au second mode de fonctionnement ne se fasse que si toutes les paires d'éléments de commutation 16 sont activées dans un intervalle de temps prédéfini. Cet intervalle de temps prédéfini existe de sorte que le passage d'un mode de fonctionnement à un autre ne se fasse pas si la durée entre l'activation d'une paire et une autre est trop importante. Avec la définition d'un intervalle de temps durant lequel l'activation de toutes les paires d'éléments de commutation doit être réalisée, le passage d'un mode de fonctionnement à un autre est fiable et ne se fait que lorsque ce dernier est réellement désiré.

De même, ces manipulations du premier mode de réalisation et du second mode de réalisation peuvent être également utilisées lors du passage du second mode de fonctionnement au premier mode de fonctionnement.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

On peut même imaginer que ces manipulations des premier et second modes de fonctionnement servent pour la confirmation de sélection. On entend par là que dans un menu dans lequel il est possible de choisir une fonction, il est envisageable que l'utilisateur choisisse la fonction désirée et qu'il confirme son choix en utilisant la manipulation selon l'invention c'est à dire en activant simultanément deux éléments capacitifs situés de part et d'autre du boitier 12.

## Revendications

1. Objet portable comprenant un boîtier (12) fermé par un fond (12a) et par des moyens d'affichage (13), un module électronique (11) agencé dans ledit boîtier, un bracelet fixé sur deux flancs opposés du boîtier, et des moyens de commande (15) pour agir sur ledit module électronique, ledit objet portable (10) étant configuré pour fonctionner selon un premier mode de fonctionnement et selon un second mode de fonctionnement, **caractérisé en ce que** lesdits moyens de commande (15) comprennent une pluralité d'éléments de commutation (16) tactiles situés sur des côtés opposés du boîtier, deux éléments de commutation situés en regard l'un de l'autre formant une paire d'éléments de commutation, les moyens de commandes comprenant au moins deux paires d'éléments de commutation, et **en ce qu'**au moins le passage du premier mode de fonctionnement au second mode de fonctionnement est réalisé par action simultanée sur les deux éléments de commutation de l'une quelconque des paires d'éléments de commutation.

2. Objet portable selon la revendication 1, **caractérisé en ce que** les éléments de commutation (16) sont situés symétriquement par rapport à un axe 12h - 6h.

3. Objet portable selon l'une des revendications précédentes, **caractérisé en ce que** lesdits moyens de commande (15) comprennent deux séries d'éléments de commutation comprenant chacune un nombre d'élément de commutation (16) identique.

4. Objet portable selon la revendication 3, **caractérisé en ce que** chaque série d'éléments de commutation comprend trois éléments de commutation (16).

5. Procédé comportant les étapes suivantes:
- Se munir d'un objet portable selon l'une des revendications 1 à 4 ; et
- Passer du premier au second mode de fonctionnement par l'action simultanée sur les deux éléments de commutation de l'une quelconque des paires d'éléments de commutation.

6. Procédé selon la revendication 5, **caractérisé en ce qu'**il comprend en outre une étape visant à passer du second mode de fonctionnement au premier mode de fonctionnement, cette étape étant réalisée par action simultanée sur au moins une dite paire.

7. Procédé selon la revendication 5, **caractérisé en ce qu'**il comprend en outre une étape visant à sélectionner puis activer une fonction, l'activation de ladite fonction étant réalisée par action simultanée sur ladite paire.

8. Procédé selon la revendication 7, **caractérisé en ce que** les au moins deux paires d'éléments de commutation (16) sont situés symétriquement par rapport à un axe 12h - 6h.

9. Procédé selon l'une des revendications 5 à 8, **caractérisé en ce que** lesdits moyens de commande (15) comprennent deux séries d'éléments de commutation comprenant chacune un nombre d'élément de commutation (16) identique.

10. Procédé selon la revendication 9, **caractérisé en ce que** chaque série d'éléments de commutation comprend trois éléments de commutation(16).

11. Procédé selon la revendication 11, **caractérisé en ce qu'**au moins le passage du premier mode de fonctionnement au second mode de fonctionnement est réalisé par action successive sur au moins deux paires d'éléments de commutation (16), chaque paire étant constitués par deux éléments de commutation symétriques l'un par rapport à l'autre par rapport à un axe 12h - 6h.

## Patentansprüche

1. Tragbarer Gegenstand, ein Gehäuse (12) umfassend, das durch einen Boden (12a) und durch Anzeigemittel (13) geschlossen ist, ein Elektronikmodul (11), das in dem Gehäuse angeordnet ist, ein Armband, das an zwei gegenüberliegenden Flanken des Gehäuses befestigt ist, und Steuerungsmittel (15), um auf das Elektronikmodul einzuwirken, wobei der tragbare Gegenstand (10) konfiguriert ist, um entsprechend einem ersten Funktionsmodus und entsprechend einem zweiten Funktionsmodus zu funktionieren, **dadurch gekennzeichnet, dass** die Steuerungsmittel (15) eine Vielzahl von taktilen Schaltelementen (16) umfassen, die auf gegenüberliegenden Seiten des Gehäuses gelegen sind, wobei zwei Schaltelemente einander gegenüber gelegen sind, und ein Paar von Schaltelementen bilden, wobei die Steuerungsmittel mindestens zwei Schaltelementpaare umfassen, und dadurch, dass mindestens der Übergang von dem ersten Funktionsmodus zum zweiten Funktionsmodus durch gleichzeitiges Einwirken auf die beiden Schaltelemente irgendeines der Schaltelementpaare realisiert wird.

2. Tragbarer Gegenstand nach Anspruch 1, **dadurch gekennzeichnet, dass** die Schaltelemente (16) symmetrisch in Bezug auf eine Achse 12 Uhr - 6 Uhr gelegen sind.

3. Tragbarer Gegenstand nach einem der vorstehenden Ansprüche, **dadurch gekennzeichnet, dass** die Steuerungsmittel (15) zwei Schaltelementreihen umfassen, die jeweils eine identische Schaltelementanzahl (16) umfassen.

4. Tragbarer Gegenstand nach Anspruch 3, **dadurch gekennzeichnet, dass** jede Reihe von Schaltelementen drei Schaltelemente (16) umfasst.

5. Verfahren, die folgenden Schritte beinhaltend:
- Vorsehen eines tragbaren Gegenstandes nach einem der Ansprüche 1 bis 4; und
- Übergehen vom ersten in den zweiten Funktionsmodus durch gleichzeitiges Einwirken auf die beiden Schaltelemente irgendeines der Schaltelementpaare.

6. Verfahren nach Anspruch 5, **dadurch gekennzeichnet, dass** es weiter einen Schritt umfasst, der darauf abzielt, vom zweiten Funktionsmodus in den ersten Funktionsmodus überzugehen, wobei dieser Schritt durch gleichzeitiges Einwirken auf mindestens ein Paar realisiert wird.

7. Verfahren nach Anspruch 5, **dadurch gekennzeichnet, dass** es weiter einen Schritt umfasst, der darauf abzielt, eine Funktion auszuwählen, und danach zu aktivieren, wobei die Aktivierung der Funktion durch gleichzeitiges Einwirken auf das Paar realisiert wird.

8. Verfahren nach Anspruch 7, **dadurch gekennzeichnet, dass** die mindestens zwei Schaltelementpaare (16) symmetrisch in Bezug auf eine Achse 12 Uhr - 6 Uhr gelegen sind.

9. Verfahren nach einem der Ansprüche 5 bis 8, **dadurch gekennzeichnet, dass** die Steuerungsmittel (15) zwei Reihen von Schaltelementen umfassen, die jeweils eine identische Schaltelementanzahl (16) umfassen.

10. Verfahren nach Anspruch 9, **dadurch gekennzeichnet, dass** jede Reihe von Schaltelementen drei Schaltelemente (16) umfasst.

11. Verfahren nach Anspruch 11, **dadurch gekennzeichnet, dass** mindestens der Übergang von dem ersten Funktionsmodus zum zweiten Funktionsmodus durch aufeinanderfolgendes Einwirken auf mindestens zwei Schaltelementpaare (16) realisiert wird, wobei jedes Paar aus zwei zueinander symmetrischen Schaltelementen in Bezug auf eine Achse 12 Uhr - 6 Uhr gebildet werden.

## Claims

1. Portable object comprising a case (12) closed by a back cover (12a) and by display means (13), an electronic module (11) arranged in said case, a wristband fastened on two opposite sides of the case, and control means (15) for controlling said electronic module, said portable object (10) being configured to operate in a first operating mode and in a second operating mode, **characterised in that** said control means (15) comprise a plurality of tactile switching elements (16) arranged on opposite faces of the case, two switching elements arranged opposite each other forming a pair of switching elements, the control means comprising at least two pairs of switching elements, and **in that** at least the switch from the first operating mode to the second operating mode is achieved by simultaneous action on both switching elements of any one pair of switching elements.

2. Portable object according to claim 1, **characterised in that** the switching elements (16) are arranged symmetrically with respect to a 12 o'clock - 6 o'clock axis,

3. Portable object according to any of the preceding claims, **characterised in that** said control means (15) comprise two series of switching elements each comprising an identical number of switching elements (16).

4. Portable object according to claim 3, **characterised in that** each series of switching elements comprises three switching elements (16).

5. Method including the following steps:
- Providing a portable object according to any of claims 1 to 4; and
- Switching from the first to the second operating mode by the simultaneous action on both switching elements of any one pair of switching elements.

6. Method according to claim 5, **characterised in that** it further comprises a step intended to switch from the second operating mode to the first operating mode, this step being achieved by simultaneous action on at least one said pair.

7. Method according to claim 5, **characterised in that** it further includes a step intended to select and activate a function, activation of said function being achieved by simultaneous action on said pair.

8. Method according to claim 7, **characterised in that** the at least two pairs of switching elements (16) are arranged symmetrically with respect to a 12 o'clock - 6 o'clock axis.

9. Method according to any of claims 5 to 8, **characterised in that** said control means (15) comprise two series of switching elements each comprising an identical number of switching elements (16).

10. Method according to claim 9, **characterised in that** each series of switching elements comprises three switching elements (16).

11. Method according to claim 11, **characterised in that** at least the switch from the first operating mode to the second operating mode is achieved by successive action on at least two pairs of switching elements (16), each pair being formed by two switching elements that are symmetrical to each other with respect to a 12 o'clock - 6 o'clock axis.
